(19) **Europäisches Patentamt / European Patent Office / Office européen des brevets**

(11) **EP 1 710 934 B1**

(12) **EUROPEAN PATENT SPECIFICATION**

(45) Date of publication and mention
of the grant of the patent:
**18.07.2007   Bulletin 2007/29**

(51) Int Cl.:
**H04B 10/18** (2006.01)

(21) Application number: **05290767.2**

(22) Date of filing: **06.04.2005**

(54) **Method for optimization of dispersion compensation, transponder and its use in an optical network with path protection**

Verfahren und Transponder zur Optimierung der Dispersionskompensation sowie ihre Verwendung in optischen Netzwerken mit Pfadschutz

Procédé d'optimisation de la compensation de dispersion, transpondeur et son utilisation dans des reseaux optiques avec de la protection de la chemin

(84) Designated Contracting States:
**AT BE BG CH CY CZ DE DK EE ES FI FR GB GR HU IE IS IT LI LT LU MC NL PL PT RO SE SI SK TR**

(43) Date of publication of application:
**11.10.2006   Bulletin 2006/41**

(73) Proprietor: **Alcatel Lucent**
**75008 Paris (FR)**

(72) Inventors:
• **Charlet, Gabriel**
**91190 Villiers-le-Bacle (FR)**

• **Douville, Richard**
**91310 Longpont sur Orge (FR)**

(74) Representative: **Schmidt, Werner Karl et al**
**Alcatel Lucent**
**Intellectual Property & Standards**
**70430 Stuttgart (DE)**

(56) References cited:
**US-A1- 2004 208 619        US-A1- 2004 223 766**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European Patent Convention).

**Description**

Background of the invention

The invention relates to a method for optimization of dispersion compensation in an optical data network, the network comprising two nodes (A, B), at least two paths connecting the two nodes, and means for switching between the paths.

Such a method is described in US 6,674,935.

Optical data networks, such as 10 or 40 Gbit/s networks, are used to transfer data at high speed over large distances in the order of hundreds of kilometers. Such a network comprises nodes, i.e. devices for accessing the network in order to read out data and/or feed data into the network. These nodes are linked to each other by data transfer lines. The connections between the nodes are called paths. Typically, each node is connected to several neighboring nodes.

However, problems may occur when a path in the network fails. Such a failure may be due to a planned deactivation of the path, e.g. in order to modify the network, or it may be involuntarily due to an unpredicted line break caused by a material defect. The data traffic of the network cannot use the failed path any more, endangering the data traffic as a whole.

One way to protect a network against path failure is the 1+1 protection scheme. In this scheme, a link between two nodes comprises two (or more) complete, independent and parallel paths, including two transponders at the source node and two receivers at the receiver node. Both paths are used continuously and simultaneously for the same data. In case of a failure of one of the paths, the data connection is still working without cessation by means of the other path. The 1+1 protection scheme is disadvantageous in that it requires double equipment and causes lots of redundant data traffic.

Another way to protect a network is protection switching, as mentioned in US 6,674,935. In case of a path failure, the traffic is routed around the failed path. For example, if traffic is regularly sent from a node A to a node B via a direct path AB, and said direct path AB fails, then the traffic is forced via a node C connected to both nodes A and B. The traffic then takes an alternate path A to C to B (=ACB).

The known protection switching works well for 10Gbit/s systems, since chromatic dispersion variation between a regular path and an alternate path is typically small enough to be below an acceptance window of a receiver at the receiving node. However, in 40 Gbit/s systems, the tolerance to residual dispersion is nearly 16 times narrower than for 10 Gbit/s systems. Thus the chromatic dispersion variation between the regular path and the alternate path is typically too large for a receiver at the receiving node.

US 6,674,935 describes an optical connection arrangement for facilitating network modifications during operation. An optical signal input is connected to an optical switch, and an optical signal output is connected to another optical switch. Between the optical switches, two optical ports are located. In a first switching position, a link between the signal input and the signal output is established through the first optical port and a first optical fiber, and in a second switching position, the link is established through the second optical port and a second optical fiber. More optical ports can be selectively included. At the optical ports, dispersion compensation modules can be mounted. The optical connection arrangement minimizes traffic interruption upon switching between the links.

So in US 6,674,935, separate dispersion compensation modules for a regular and an alternate path are used. This, again, requires expensive equipment multiple times.

US 2004/0223766 A1 discloses an optical network comprising a plurality of network elements. Within the network, a plurality of network connections with individual signal impairments are available. Within a network element, there a is a plurality of transmitters and receivers, employing different modulation schemes, and a light path provisioning unit connected to a memory storing impairment characteristics of the network connections. When a message signal is to be transmitted via a network connection, the light path provisioning unit chooses one of the transmitters for the message signal, and the message signal is then modulated by the modulation scheme of the chosen transmitter and sent by the chosen transmitter. The transmitter - and thus the modulation scheme - is chosen such that the signal is the least affected by signal impairments along its network connection.

US 2004/0208619 A1 discloses a tuneable dispersion compensator.

Object of the invention

It is therefore the object of the invention to provide a method for optimizing dispersion compensation in a 40 Gbit/s (or higher) system upon switching of paths, which requires only a simply designed optical data network, and at the same time allows a fast re-establishing of data transfer upon switching of paths.

Short description of the invention

This object is achieved, according to the invention, by a method as mentioned in the beginning, characterized in that that the network comprises a common tuneable dispersion compensator (=TDC) for all of the at least two paths, that prior to use of the network, for each path, a set of optimized operating parameters of the network is determined and stored, wherein the operating parameters of the network include operating parameters of the TDC, and that in use of the network, upon switching to a path, the network is automatically adjusted to a set of initial operating parameters based upon the set of predetermined operating parameters of the respective path.

The TDC is capable of compensating dispersion of every path, sufficiently to allow the operation of a receiver at a receiver node in a 40 Gbit/s system. Thus, all paths can be operated with one common TDC, keeping the network design simple.

In principle, the TDC - and the network as a whole - could be adjusted to a path switched to by standard methods such as feedback from bit error rate (=BER) measured by forward error correction (=FEC) after switching. However, the required time for such an adjustment is rather large, well above 10 seconds. This would constitute a minimum of time required for re-establishing the data transfer upon switching (=restoration time), considered too long for many purposes.

In order to make the restoration time shorter, for each path, a set of optimized operating parameters of the network is determined and stored. When switching to a new path, a set of initial operating parameters is derived from this predetermined set of operating parameters for the new path, and the network is adjusted to this initial set of operating parameters unhesitatingly. A set of operating parameters is considered optimised for a path if it allows the derivation of an initial set of operating parameters which makes the network immediately workable with said path. As a result, no measurements of dispersion characteristics of the path switched to are required for re-establishing the data transfer within the network, making the restoration time particularly short.

A set of operating parameters comprises information about the chromatic dispersion characteristics of the respective path. By suitable classification in categories, a set of operating parameters may be reduced to a single variable, in accordance with the invention.

By determining and storing a set of operating parameters for each path, a large number of alternative paths can be made workable within the network.

A highly preferred variant of the inventive method is characterized in that in case of a link break in one path, the network switches automatically to another path in good order. The short restoration time makes the inventive method particularly suited for this path protection by protection switching.

In another variant of the inventive method, the set of initial operating parameters is identical with the set of predetermined operating parameters of the respective path. In this case, no derivation operation, i.e. no calculation, is necessary to find the initial operating parameters, keeping the variant simple and quick to perform.

An alternative and preferred variant of the inventive method is characterized in that upon switching from a first path to a second path, a network variation is determined by comparing the last set of operating parameters of the first path with the set of predetermined operating parameters of the first path, and the set of initial operating parameters of the second path is derived from the set of predetermined operating parameters of the second path taking into account the determined network variation. The characteristics of the network may be subject to significant changes during operation, such as a seasonal change of temperature. Then the operating parameters of the network need to be adapted to these changes for optimal network performance. The network variation indicates the current network characteristics. In case of a switching of paths, taking into account the network variation allows the derivation of more accurate initial operating parameters for the path to switch to, i.e. the network performance immediately after switching is improved. The derivation may include a weighting of the network variations with path lengths.

In a preferred variant of the inventive method, the operating parameters of the network include a receiver threshold and/or a receiver phase. By this means, network performance immediately after switching can be improved.

The invention comes to show to advantage in a variant wherein the optical network has a data transfer rate of 40Gbit/s or more. The variant can provide chromatic dispersion compensation with short restoration times even at these rates of data transfer, with just one TDC.

Further preferred is a variant characterized in that the TDC is adapted to the set of initial operating parameters by means of a software signal. This adaptation is particularly quick and easy to realize.

In another advantageous variant of the inventive method, after having adjusted the network to the set of initial operating parameters upon a switching of paths, an optimization process for the operating parameters is launched. Although the initial operating conditions make the network immediately workable, they may differ from the best possible operation parameters, e.g. because of unbalanced degradation of data transfer lines over time. By means of the variant, better operating conditions can be found and used, increasing the network performance. Said optimisation process may include FEC measurements of BER.

The scope of the invention also comprises a transponder for an optical data network, comprising at least two ports for providing connections to at least two respective paths of the network, further comprising means for switching between the ports, characterized in that the transponder comprises a common tuneable dispersion compensator (=TDC) for all of the at least two ports, further comprising storage means, storing a set of predetermined optimized operating parameters of the transponder for each port, wherein the operating parameters of the transponder include operating parameters of the TDC, and means for automatically adjusting the transponder, upon switching to a port, to a set of initial operating parameters based upon the set of operating parameters predetermined for the respective port. Such an inventive transponder can be used when performing the inventive methods described above.

Furthermore, the scope of the invention also comprises the use of an inventive transponder as described above in an optical network with path protection.

Further advantages can be extracted from the description and the enclosed drawing. The features mentioned above and below can be used in accordance with the invention either individually or collectively in any combination. The embodiments mentioned are not to be understood as exhaustive enumeration but rather have exemplary character for the description of the invention.

Drawing

The invention is shown in the drawing.

Fig. 1     shows an optical data network with optimized dispersion compensation in accordance with the invention in a state before a link break;

Fig. 2     shows the optical data network of Fig. 1 in a state after a link break.

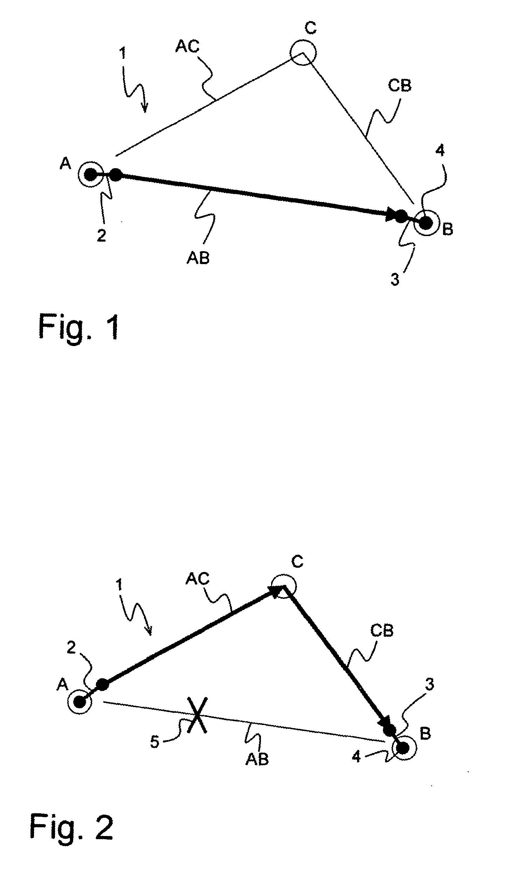

**Fig. 1** shows an optical data network 1 with path protection and restoration in accordance with the invention. The network 1 comprises three nodes A, B and C, connected to each other by paths AB, AC and CB, respectively. The path lengths are 500 km for AB, 300 km for AC and 350 km for CB. The nodes A, B, C are suited for inserting data into the network 1 and reading out data from the network 1. The network 1 may comprise further nodes and corresponding connections (not shown).

The nodes A, B comprise optical switches 2, 3 for choosing a path for data to be transferred from node A to node B. Regularly, the direct path AB is used, being the shortest connection of node A and node B. In the state shown in Fig. 1, the switches 2, 3 are in their lower positions for the direct path AB. The data transfer rate is 40 Gbit/s.

Node B comprises a tunable dispersion compensator (=TDC) 4, which is connected to the right end of the switch 3. Thus, the TDC 4 is used in any position of the switch 3, i.e. with any path data traffic can be transferred from. The transferred traffic is, thanks to the TDC 4, within an acceptance window of a receiver (not shown) at the receiving node B. Node B basically constitutes an inventive transponder in the sense of the invention, with the left connections of the switch 3 being its ports.

A set of optimized operating parameters for both paths AB and A to C to B (=ACB) were determined upon installation of the network 1. For this reason, it is known that path AB has an accumulated dispersion of about +100 ps/nm, and path ACB has an accumulated dispersion of about +50 ps/nm. Moreover, an optimized receiver threshold and phase were determined and recorded for each path AB and ACB upon installation.

When path AB is in use, as shown in Fig. 1, the operating parameters of the network 1 are adapted to this path. In particular, the TDC 4 is chosen to compensate for +100 ps/nm.

During the life of the network 1, a link break 5 in the direct path AB linking nodes A and B can occur. The network 1 in such a damaged state is shown in **Fig. 2**. The data is then redirected via node C, using paths AC and CB. The redirection is done by switching the optical switches 2, 3 into their upper positions, directed to node C, respectively. The switching is done as soon as the link break 5 is detected. At the same time, the operating parameters of the network 1 are adjusted to the protection path ACB. In particular, the operating parameters of the TDC 4 are changed to new, initial values suitable for compensating +50 ps/nm. It is not necessary to measure the dispersion characteristics of path ACB again before adjusting the TDC. The new initial operating parameters make the network 1 immediately workable.

In order to get better network performance, in particular a lower BER, the operating parameters of the network 1 can be optimized during the use of the network 1. Typical optimization algorithms include FEC measurements of BER, for example. A change of the best operating conditions can occur due to temperature variation. Then, when switching between paths, the current network variation should be taken into account.

As an example, immediately before the link break 5 was detected, the TDC 4 compensated for an accumulated dispersion of only +80 ps/nm in path AB, instead of the +100 ps/nm. This means the network 1 had a network variation of

$$(80 \text{ ps/nm} - 100 \text{ ps/nm}) = -20 \text{ ps/nm}$$

with respect to accumulated dispersion of path AB. Therefore, the initial operating parameter for the TDC 4 for path ACB should not be the predetermined operating parameter of +50 ps/nm, but be adapted accordingly. Assuming that the network variation is merely an adding number, an initial operating parameter for path ABC results as

$$(50 \text{ ps/nm} - 20 \text{ ps/nm}) = 30 \text{ ps/nm}.$$

As part of the installation procedure, a correlation function between network variations in various paths can be determined. When the network variation of the path switched away from is known, the correlation function can be used for calculating the initial operating parameters from the predetermined optimized operating parameters of the path to switch to.

Of course, the initial operating parameters may be a starting point for further optimization of the operating parameters of the path switched to, e.g. using FEC measurement of BER.

**Claims**

1. A method for optimization of dispersion compensation in an optical data network (1), the network (1) comprising two nodes (A, B), at least two paths (AB, ACB) connecting the two nodes (A, B), and means (2, 3) for switching between the paths (AB, ACB),
**characterized in**
**that** the network (1) comprises a common tuneable dispersion compensator TDC (4) for all of the at least two paths (AB, ACB), **that** prior to use of the network (1), for each path (AB, ACB), a set of optimized operating parameters of the network (1) is determined and stored, wherein the operating parameters of the network (1) include operating parameters of the TDC (4),
and **that** in use of the network (1), upon switching to a path (AB, ACB), the network (1) is automatically adjusted to a set of initial operating parameters based upon the set of predetermined operating parameters of the respective path (AB, ACB).

2. Method according to claim 1, **characterized in that** in case of a link break (5) in one path (AB), the network (1) switches automatically to another path (ACB) in good order.

3. Method according to claim 1, **characterized in that** the set of initial operating parameters is identical with the set of predetermined operating parameters of the respective path (AB, ACB).

4. Method according to claim 1, **characterized in that** upon switching from a first path (AB, ACB) to a second path (AB, ACB), a network variation is determined by comparing the last set of operating parameters of the first path (AB, ACB) with the set of predetermined operating parameters of the first path (AB, ACB), and the set of initial operating parameters of the second path (AB, ACB) is derived from the set of predetermined operating parameters of the second path (AB, ACB) taking into account the determined network variation.

5. Method according to claim 1, **characterized in that** the operating parameters of the network (1) include a receiver threshold and/or a receiver phase.

6. Method according to claim 1, **characterized in that** the optical network (1) has a data transfer rate of 40Gbit/s or more.

7. Method according to claim 1, **characterized in that** the TDC (4) is adapted to the set of initial operating parameters by means of a software signal.

8. Method according to claim 1, **characterized in that** after having adjusted the network (1) to the set of initial operating parameters upon a switching of paths (AB, ACB), an optimization process for the operating parameters is launched.

9. Transponder for an optical data network (1), comprising at least two ports for providing connections to at least two respective paths (AB, ACB) of the network (1), further comprising means (2, 3) for switching between the ports,
**characterized in that**
the transponder comprises a common tuneable dispersion compensator TDC (4) for all of the at least two ports,

further comprising storage means, storing a set of predetermined optimized operating parameters of the transponder for each port, wherein the operating parameters of the transponder include operating parameters of the TDC (4), and means for automatically adjusting the transponder, upon switching to a port, to a set of initial operating parameters based upon the set of operating parameters predetermined for the respective port.

10. Use of a transponder according to claim 9 in an optical network (1) with path protection.

**Patentansprüche**

1. Ein Verfahren zur Optimierung der Dispersionskompensation in einem optischen Datennetzwerk (1), wobei das Netzwerk (1) zwei Knoten (A, B), mindestens zwei Pfade (AB, ACB), die die beiden Knoten (A, B) miteinander verbinden, und Mittel (2, 3) zum Umschalten zwischen den Pfaden (AB, ACB) umfasst, **dadurch gekennzeichnet,** **dass** das Netzwerk (1) einen gemeinsamen, einstellbaren Dispersionekompensator TDC (4) für alle der mindestens zwei Pfade (AB, ACB) umfasst, dass vor dem Einsatz des Netzwerks (1) für jeden Pfad (AB, ACB) eine Einheit an optimierten Betriebsparametern für das Netzwerk (1) festgelegt und gespeichert wird, wobei die Betriebsparameter des Netzwerks (1) die Betriebsparameter des TDC (4) beinhalten, und **dass** beim Einsatz des Netzwerks (1) beim Umschalten auf einen Pfad (AB, ACB) das Netzwerk (1) automatisch an eine Einheit von Ausgangs-Betriebsparametern, basierend auf der Einheit an vordefinierten Betriebsparametern für den jeweiligen Pfad (AB, ACB) angepasst wird.

2. Verfahren gemäß Anspruch 1, **dadurch gekennzeichnet, dass** das Netzwerk (1) im Fall einer Leitungsunterbrechung (5) in einem Pfad (AB) automatisch auf einen anderen, einwandfrei funktionierenden Pfad (ACB) umschaltet.

3. Verfahren gemäß Anspruch 1, **dadurch gekennzeichnet, dass** die Einheit an Ausgangs-Betriebsparametern mit der Einheit an vordefinierten Betriebsparametern für den jeweiligen Pfad (AB, ACB) identisch ist.

4. Verfahren gemäß Anspruch 1, **dadurch gekennzeichnet, dass** beim Umschalten von einem ersten Pfad (AB, ACB) auf einen zweiten Pfad (AB, ACB) eine Netzwerkvariation ermittelt wird, indem die erste Einheit an Betriebsparametern für den ersten Pfad (AB, ACB) mit der Einheit der vordefinierten Betriebsparametern für den ersten Pfad (AB, ACB) verglichen und die Einheit aus Ausgangs-Betriebsparametern für den zweiten Pfad (AB, ACB) von der Einheit an vordefinierten Betriebsparametern für den zweiten Pfad (AB, ACB) abgeleitet wird, wobei die ermittelte Netzwerkvariation berücksichtigt wird.

5. Verfahren gemäß Anspruch 1, **dadurch gekennzeichnet, dass** die Betriebsparameter des Netzwerks (1) einen Empfängergrenzwert und/oder eine Empfängerphase umfassen.

6. Verfahren gemäß Anspruch 1, **dadurch gekennzeichnet, dass** das optische Netzwerk (1) eine Datenübertragungsgeschwindigkeit von 40 Gbit/s oder darüber aufweist.

7. Verfahren gemäß Anspruch 1, **dadurch gekennzeichnet, dass** der TDC (4) mit Hilfe eines Softwaresignals an die Ausgangs-Betriebsparameter angepasst wird.

8. Verfahren gemäß Anspruch 1, **dadurch gekennzeichnet, dass** nach der Anpassung des Netzwerks (1) an die Ausgangs-Betriebsparameter, nach dem Umschalten von Pfaden (AB, ACB) ein Optimierungsprozess für die Betriebsparameter gestartet wird.

9. Transponder für ein optisches Datennetzwerk (1), der mindestens zwei Anschlüsse zur Bereitstellung von Verbindungen zu mindestens zwei Pfaden (AB, ACB) des Netzwerks (1) umfasst, der außerdem Mittel (2, 3) zum Umschalten zwischen den Anschlüssen umfasst, **dadurch gekennzeichnet,** **dass** der Transponder einen gemeinsamen, einstellbaren Dispersionskompensator TDC (4) für alle der mindestens zwei Anschlüsse umfasst, **dass** er außerdem Speichermittel umfasst, die eine Einheit an vordefinierten, optimierten Betriebsparametern des Transponders für jeden Anschluss speichern, wobei die Betriebsparameter des Transponders die Betriebsparameter des TDC (4) beinhalten,

sowie Mittel zur automatischen Anpassung des Transponders nach dem Umschalten auf einen Anschluss an eine Einheit an Ausgangs-Betriebsparametern, basierend auf der Einheit an Betriebsparametern, die für den jeweiligen Anschluss vordefiniert wurden.

**10.** Einsatz eines solchen Transponders gemäß Anspruch 9 in einem optischen Netzwerk (1) mit Pfadschutz.

**Revendications**

**1.** Procédé d'optimisation de compensation de dispersion dans un réseau de données optique (1),
le réseau (1) comprenant deux noeuds (A, B), au moins deux chemins (AB, ACB) connectant les deux noeuds (A, B) et des moyens (2, 3) pour commuter entre les chemins (AB, ACB),
**caractérisé en ce**
**que** le réseau (1) comprend un compensateur de dispersion accordable TDC (4) commun pour au moins tous les deux chemins (AB, ACB),
**qu'**avant l'utilisation du réseau (1), pour chaque chemin (AB, ACB), un ensemble de paramètres de fonctionnement optimisés du réseau (1) est déterminé et stocké, dans lequel les paramètres de fonctionnement du réseau (1) incluent des paramètres de fonctionnement du TDC (4),
et **que** dans l'utilisation du réseau (1), lors de la commutation sur un chemin (AB, ACB), le réseau (1) est automatiquement réglé sur un ensemble de paramètres de fonctionnement initiaux sur la base de l'ensemble de paramètres de fonctionnement prédéterminés du chemin respectif (AB, ACB).

**2.** Procédé selon la revendication 1, **caractérisé en ce que** dans le cas d'une rupture de liaison (5) dans un chemin (AB), le réseau (1) commute automatiquement sur un autre chemin (ACB) en bon état.

**3.** Procédé selon la revendication 1, **caractérisé en ce que** l'ensemble des paramètres de fonctionnement initiaux est identique à l'ensemble de paramètres de fonctionnement prédéterminés du chemin respectif (AB, ACB).

**4.** Procédé selon la revendication 1, **caractérisé en ce que** lors de la commutation d'un premier chemin (AB, ACB) sur un second chemin (AB, ACB), une variation de réseau est déterminée par la comparaison du dernier ensemble de paramètres de fonctionnement du premier chemin (AB, ACB) avec l'ensemble de paramètres de fonctionnement prédéterminés du premier chemin (AB, ACB), et l'ensemble de paramètres de fonctionnement initiaux du second chemin (AB, ACB) est déduit de l'ensemble de paramètres de fonctionnement prédéterminés du second chemin (AB, ACB) en tenant compte de la variation de réseau déterminée.

**5.** Procédé selon la revendication 1, **caractérisé en ce que** les paramètres de fonctionnement du réseau (1) incluent un seuil de récepteur et/ou une phase de récepteur.

**6.** Procédé selon la revendication 1, **caractérisé en ce que** le réseau optique (1) a un débit de transfert de données de 40 Gbit/s ou plus.

**7.** Procédé selon la revendication 1, **caractérisé en ce que** le TDC (4) est adapté à l'ensemble des paramètres de fonctionnement initiaux au moyen d'un signal logiciel.

**8.** Procédé selon la revendication 1, **caractérisé en ce qu'**après avoir réglé le réseau (1) sur l'ensemble de paramètres de fonctionnement initiaux lors d'une commutation de chemins (AB, ACB), un processus d'optimisation pour les paramètres de fonctionnement est lancé.

**9.** Transpondeur pour un réseau de données optique (1),
comprenant au moins deux ports pour fournir des connexions sur au moins deux chemins respectifs (AB, ACB) du réseau (1),
comprenant en outre des moyens (2, 3) pour commuter entre les ports,
**caractérisé en ce que**
le transpondeur comprend un compensateur de dispersion accordable TDC (4) commun pour au moins tous les deux ports,
comprenant en outre des moyens de stockage, stockant un ensemble de paramètres de fonctionnement optimisés prédéterminés du transpondeur pour chaque port, dans lequel les paramètres de fonctionnement du transpondeur incluent des paramètres de fonctionnement du TDC (4),

et des moyens pour régler automatiquement le transpondeur, lors de la commutation sur un port, sur un ensemble de paramètres de fonctionnement initiaux sur la base de l'ensemble de paramètres de fonctionnement prédéterminés pour le port respectif.

10. Utilisation d'un transpondeur selon la revendication 9 dans un réseau optique (1) avec une protection de chemin.

Fig. 1

Fig. 2

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 6674935 B
- US 20040223766 A1
- US 20040208619 A1